# FASCICULE DE BREVET EUROPEEN

(11) **EP 0 740 747 B1**
(45) Date de publication et mention de la délivrance du brevet: **24.03.1999**
(21) Numéro de dépôt: 95933461.6
(22) Date de dépôt: 29.09.1995
(51) Int. Cl.: F16F 15/123

(54) **DISPOSITIF AMORTISSEUR DE TORSION A CASSETTE DE PREAMORTISSEMENT**
VORSCHALTBARE DÄMPFUNGSEINHEIT ZUR DÄMPFUNG VON ROTATIONSSCHWINGUNGEN
TORSIONAL DAMPER DEVICE WITH A PRE-DAMPING CASSETTE

(30) Priorité: 04.10.1994 FR 9411833
(43) Date de publication de la demande: 06.11.1996
(73) Titulaire: VALEO, 75017 Paris (FR)
(72) Inventeur: PHELPS, Nicolas, F-75017 Paris (FR); VILLATA, Gino, I-14021 Buttigliera d'Asti (IT)
(74) Mandataire: Gamonal, Didier
(86) Numéro de dépôt international: FR9501271
(87) Numéro de publication internationale: WO9610703

(56) Documents cités:
- FR-A- 2 613 800
- GB-A- 2 254 398
- US-A- 4 917 573

## Description

La présente invention concerne un dispositif amortisseur de torsion comportant au moins deux parties coaxiales, montées rotatives l'une par rapport à l'autre dans les limites d'un débattement angulaire déterminé, ainsi qu'un sous-ensemble de préamortissement et de centrage communément appelé cassette de préamortissement.

La présente invention concerne plus particulièrement un perfectionnement en rapport avec une telle cassette de préamortissement.

Celle-ci est usuellement destinée à amortir les pointes d'un couple de rotation transmis au régime de ralenti du moteur, d'une des parties coaxiales à une autre, à savoir, dans le cas particulier d'une friction d'embrayage, d'un voile de moyeu à un moyeu, lui-même couplé à un arbre mené.

La cassette de préamortissement comprend, de manière connue, deux flasques situés de part et d'autre d'un voile auxiliaire, reliés au voile de moyeu par une pluralité de doigts engagés dans des fenêtres de ce dernier.

La présente invention s'applique plus particulièrement à un dispositif d'amortissement de torsion dans lequel la délimitation du débattement angulaire entre le moyeu et le voile de moyeu est assurée par des moyens d'engrènement à jeu, en coopération avec des moyens de préamortissement et de centrage élastiques, propres à réduire l'impact de la fin de course du voile de moyeu par rapport au moyeu et à les ramener dans une position intermédiaire.

Une cassette de préamortissement, solidarisée en rotation avec le moyeu et comportant des doigts engagés dans des fenêtres ménagées dans le voile de moyeu constituent de tels moyens de préamortissement et de centrage. Un tel dispositif d'amortissement est décrit dans GB-A-2 254 398 ou dans FR-A-2 613 800 conforme au préambule de la revendication 1.

Cette solution présente néanmoins des inconvénients car l'impact de la fin de course du voile par rapport au moyeu reste bruyant.

Pour pallier ces inconvénients, la présente invention propose un dispositif d'amortissement de torsion, notamment pour embrayage de véhicule automobile, du type comportant une cassette de préamortissement solidarisée en rotation avec une première partie rotative ccmportant un moyeu, en possédant des doigts engagés chacun dans une fenêtre d'une deuxième partie rotative comportant un voile de moyeu, lesdites parties rotatives étant coaxiales et leur débattement angulaire relatif étant limité par des moyens d'engrênement à jeu, caractérisé en ce qu'une liaison élastique agissant en direction circonférentielle est établie entre chaque dooigt et ledit voile de moyeu.

Cette liaison élastique peut être obtenue par insertion dans chaque fenêtre du voile de mcyeu d'une bague en matériau élastomère.

Une telle bague atténue fortement le bruit de l'impact des doigts de la cassette contre les fenêtres du voile de moyeu. De plus, elle fournit un étage de filtrage supplémentaire au couple de rotation à transmettre.

La liaison élastique entre la cassette de préamortissement et le voile de moyeu atténue les contraintes éventuellement créées dans la cassette par un excentrage entre l'arbre menant et l'arbre mené.

Une telle bague est de fabrication économique et de mise en place aisée.

Enfin, grâce aux bagues en matériau élastique, il est possible de former un sous-ensemble comprenant la cassette de préamortissement, le moyeu et le voile de moyeu.

D'autres avantages de l'invention ressortiront d'ailleurs de la description qui va suivre, à titre d'exemple, en référence aux dessins sur lesquels:
- la figure 1 est une vue en coupe d'une friction d'embrayage avec un préamortisseur suivant l'invention;
- la figure 2 est, à échelle supérieure, une vue de l'encadré II de la figure 1.

Ces figures illustrent à titre d'exemple l'application de l'invention à un dispositif amortisseur de torsion, qui, destiné à constituer une friction d'embrayage pour embrayage de véhicule automobile, comporte, successivement montées rotatives deux à deux les unes par rapport aux autres, trois parties coaxiales, à savoir, une partie A, constituée pour l'essentiel par un moyeu 10, une partie B, constituée pour l'essentiel par un voile de moyeu 11, qui entoure le moyeu 10, et une partie C, constituée pour l'essentiel par deux rondelles de guidage 12, disposées de part et d'autre du voile de moyeu Il et entourant le moyeu 10, liées l'une à l'autre par des colonnettes 9, de sorte à être animées du même mouvement de rotation.

La partie coaxiale C porte un disque de friction 13, destiné de manière connue à être serré entre deux plateaux liés en rotation à un arbre menant, l'arbre de sortie ou vilebrequin du moteur dans le cas concerné d'un véhicule automobile.

Le moyeu 10 présente quant à lui des cannelures intérieures 14, destinées à le solidariser en rotation à un arbre mené en rotation, l'arbre d'entrée de la boîte de vitesses associée dans le cas d'un tel véhicule automobile.

Les parties coaxiales B et C sont montées rotatives l'une par rapport à l'autre, à l'encontre de moyens élastiques interposés circonférentiellement entre elles, constitués, dans la forme de réalisation représentée, par des ressorts 15 et 15a du type ressorts à boudin montés dans des fenêtres pratiquées en vis-à-vis dans les rondelles de guidage 12 et le voile de moyeu 11.

L'ensemble ainsi constitué par les parties coaxiales B, C et les ressorts 15, 15a constitue le dispositif d'amortissement principal de la friction d'embrayage. Son fonctionnement, bien connu par lui-même, ne sera pas décrit plus en détail et ne relève pas de la présente invention.

Les parties coaxiales A et B sont elles aussi montées rotatives l'une par rapport à l'autre, à l'encontre de moyens élastiques de préamortissement et de centrage, dans les limites d'un débattement angulaire déterminé par des moyens d'engrènement à jeu 16.

Ces moyens sont formés à la périphérie externe du moyeu 10 et à la périphérie interne du voile de moyeu 11, qui présente une denture femelle engrenant à jeu circonférentiel avec une denture mâle du moyeu 10.

Ces moyens de préamortissement et de centrage sont constitués d'une cassette de préamortissement 20, comprenant notamment un voile auxiliaire 21, et deux flasques 22 et 23 situés de part et d'autre dudit voile auxiliaire. Celui-ci est coaxial au moyeu 10 et est solidarisé en rotation et axialement avec ce dernier.

Plus précisément, le voile auxiliaire 21 est lié par sertissage au moyeu 10 à la faveur de la denture mâle coopérant avec la denture femelle du voile 11 pour formation des moyens d'engrènement à jeu.

Les deux flasques 22 et 23 montés axialement entre le voile 11 et l'une des rondelles de guidage 12 sont eux aussi coaxiaux avec le moyeu 10. On appellera flasque externe 22 le flasque le plus éloigné du voile de moyeu il et flasque interne 23 le flasque le plus proche dudit voile 11. Le flasque externe présente à sa périphérie externe des doigts 24, qui s'étendent perpendiculairement à lui, en direction du voile de moyeu 11. Chacun de ces doigts 24 traverse le flasque interne 23 à jeu de montage par une fenêtre 25 puis le voile de moyeu 11 par une fenêtre 18.

L'ensemble formé par les deux flasques 22 et 23 délimite ainsi la cassette de préamortissement. Les flasques 22, 23, ici métalliques, sont liés en rotation par coopération de forme et entourent le moyeu 10 librement, c'est-à-dire sans moyens d'engrènement à jeu.

Des ressorts 31, du type ressorts à boudin, sont intercalés circonférentiellement entre le voile auxiliaire 21, d'une part, et l'ensemble des deux flasques 22, 23, d'autre part. Ils sont maintenus dans des fenêtres pratiquées en vis-à-vis dans ces éléments. Ces ressorts exercent une force pour ramener le moyeu 10 et le voile de moyeu il dans une position intermédiaire de centrage de leur débattement angulaire.

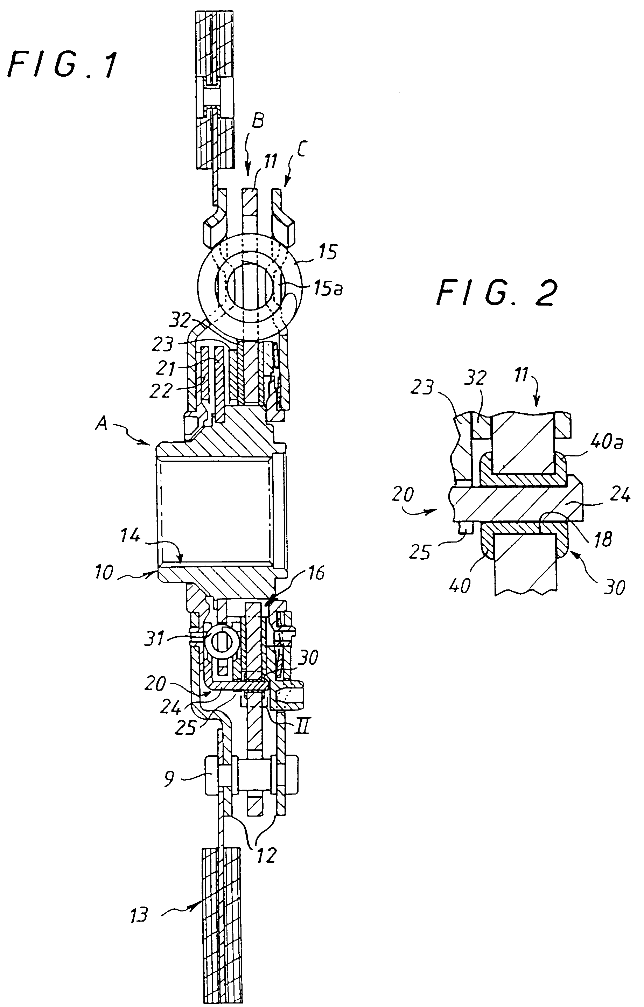

Une bague en matériau élastomère 30 est insérée dans chaque fenêtre 18 du voile de moyeu 11, le doigt 24 correspondant étant engagé dans cette bague. Ainsi et selon une caractéristique importante de l'invention, une liaison élastique agissant en direction circonférentielle est établie entre chaque doigt 24 et le voile de moyeu 11. Cette bague 30 est adaptée à être clipsée sur la fenêtre 18 avant la mise en place de la cassette de préamortissement 20. Pour ce faire, elle comporte des rebords de clipsage 40, 40a plus larges que la fenêtre 18 du voile de moyeu dans laquelle la bague 30 est insérée. Les rebords 40 et 40a s'étendent chacun sur une face du voile de moyeu 11, de sorte à immobiliser la bague 30 dans la fenêtre 18. Le doigt 24 présente à son extrémité libre un cran offrant un épaulement au rebord 40a (figure 2).

Une rondelle en matière plastique 32 est insérée entre le flasque interne 23 et le voile de moyeu 11, elle a donc une face en contact avec le flasque 23 et une face en contact avec le voile de moyeu 11. Elle évite un contact métal sur métal entre le flasque 23 et le voile 11.

Un dispositif de frottement est également inséré entre le voile 11 et l'autre rondelle de guidage 12. Ce dispositif comprend, de manière connue en soi, une rondelle Belleville prenant appui contre la rondelle de guidage 12 et contre une rondelle d'application calée en rotation sur la rondelle 15 par des pions engagés dans des trous de la rondelle 12 (figure 1).

Une rondelle de frottement est intercalée entre le voile 11 et la rondelle d'application.

Lorsqu'un couple de rotation est transmis de l'arbre de sortie du moteur au disque de friction 13, la raideur des ressorts 15 et 15a bloque dans un premier temps la rotation relative des parties B et C. L'ensemble formé des parties B et C se trouve donc entraîné en rotation par rapport au moyeu 10. Les flasques 22 et 23 sont entraînés en rotation par le voile de moyeu 11, la bague élastomère 30 et la rondelle plastique 32 constituant un dispositif d'amortissement du couple transmis du voile de moyeu 11 aux flasques 22 et 23. Les ressorts 31 sont alors sollicités puisque le moyeu 10 est encore immobile. Les ressorts 31 réduisent donc l'impact de la fin de course du voile de moyeu 11 dans les limites de son débattement angulaire par rapport au moyeu 10. Une fois que le voile de moyeu 11 a atteint sa position de fin de course par rapport au moyeu 10, ce dernier est entraîné en rotation par ledit voile de moyeu. Le second étage d'amortissement, qui comprend les ressorts 15 et 15a, entre alors en action de manière connue.

Avantageusement, les bagues 30 sont plus raides que les ressorts 31. on peut inverser les structures et monter la bague sur les doigts 24 puis insérer l'ensemble dans la fenêtre 18. En variante, on réalise un surmoulage.

On appréciera que les ressorts 31 travaillent dans de bonnes conditions grâce aux bagues permettant un excentrage entre le voile 11 et le moyeu 10, et ce tant radialement qu'axialement.

On appréciera qu'il est possible de former un sous-ensemble comprenant la cassette de préamortissement 20, le moyeu 10, la rondelle 32 et le voile de moyeu 11, ce qui facilite le montage du dispositif amortisseur de torsion.

En effet, la cassette 20 est fixée grâce à son voile auxiliaire 21 sur le moyeu 10. Plus précisément, la denture mâle précitée du moyeu 10 consiste en des cannelures de hauteur réduite au niveau du voile 21, qui présente intérieurement une denture femelle complémentaire de celle du moyeu 10. Le voile 21 est donc calé en rotation sur le moyeu 21 et axialement dans un sens sur le moyeu 21 à l'aide de l'épaulement formé au niveau du raccordement de la portion de hauteur réduite des cannelures du moyeu 10 avec la portion principale de celles-ci.

Dans l'autre sens, le voile 21 est calé axialement par fluage de matière (sertissage) de l'extrémité libre des portions de hauteur réduite des cannelures du moyeu 10.

Après insertion de la rondelle 32 entre le voile 11 et le flasque 23, on peut venir fixer le voile 11 sur les doigts 24 grâce aux bagues 30 en matériau élastomère montées avantageusement sous légère précontrainte entre leurs doigts 24 et leur ouverture 18 associés.

La formation des rebords de clipsage 40, 40a et du cran à l'extrémité du doigt 24 est très favorable pour la formation du sous-ensemble, car la bague 30 est montée par avance sur le voile 11, le doigt 24 s'engageant à encliquetage dans ladite bague.

Si besoin est, on peut interposer une rondelle commune à tous les doigts 24 entre les crans de ceux-ci et les bourrelets 40a.

Quoi qu'il en soit les crans, dirigés vers l'axe de l'ensemble, des doigts 24 permettent la formation par encliquetage du sous-ensemble précité.

Bien entendu, les flasques 22, 23 peuvent être en matière plastique, en sorte que la présence de la rondelle 32 n'est pas indispensable.

Ainsi qu'on l'aura compris, on peut fixer le disque 13 sur la rondelle de guidage 12 concernée, introduire dans la rondelle le sous-ensemble précité, puis monter le reste du dispositif amortisseur.

## Revendications

1. Dispositif amortisseur de torsion, notamment peur embrayage de véhicule automobile, du type comportant une cassette de préamortissement (20) solidarisée en rotation avec une première partie rotative comportant un moyeu (10), et possédant des doigts (24) engagés chacun dans une fenêtre (18) d'une deuxième patrie rotative (11) comportant un voile de moyeu, lesdites parties rotatives étant coaxiales et leur débattement angulaire relatif étant limité par des moyens d'engrènement à jeu (16), caractérise en ce qu'une liaison élastique (30) agissant en direction circonférentielle est établie entre chaque doigt (24) et ledit voile de moyeu (11),

2. Dispositif selon la revendication 1, caractérisé en ce que ladite liaison élastique est obtenue par mise en place d'une bague en matériau élastomère (30) insérée dans chacune desdites fenêtres du voile de moyeu, le doigt (24) correspondant étant engagé dans cette bague.

3. Dispositif selon la revendication 2, caractérisé en ce que ladite bague (30) est clipsée dans sa fenêtre (18) et comporte des rebords de clipsage (40,40a) plus larges que la fenêtre (18) du voile de moyeu (11) dans laquelle la bague en matériau élastomère (30) est insérée.

4. Dispositif selon la revendication 3, caractérisé en ce que les rebords de clipsage (40, 40a) s'étendent chacun sur une face du voile (11) de sorte à immobiliser ladite bague (30) dans la fenêtre (18).

5. Dispositif selon la revendication 4, caractérisé en ce que le doigt (24) présente à son extrémité libre un cran offrant un épaulement au rebord (40a) concerné.

6. Dispositif selon la revendication 5, caractérisé en ce que le cran est dirigé vers l'axe de l'ensemble.

7. Dispositif selon l'une quelconque des revendications 1 à 6, dans lequel la cassette de préamortissement (20) comporte des ressorts (31) intercalés circonférentiellement d'une part, entre un voile auxiliaire (21), solidarisé en rotation au moyeu (10), et , d'autre part, entre deux flasques (22, 23) situés de part et d'autre dudit voile auxiliaire, et dans lequel le flasque (22) le plus éloigné du voile de moyeu (11) présente lesdits doigts (24), caractérisé en ce que les bagues (30) sont plus raides que les ressorts (31).

8. Dispositif selon la revendication 7, caractérisé en ce que les doigts (24) traversent chacun l'autre flasque (23) à jeu de montage par une fenêtre (25) puis la fenêtre (18) du voile de moyeu (11).

9. Dispositif selon l'une quelconque des revendications précédentes, caractérisé en ce qu'une rondelle en matière plastique (32) est disposée entre ladite cassette de préamortissement (20) et le voile de moyeu (11).

## Patentansprüche

1. Drehschwingungsdämpfervorrichtung, insbesondere für eine Kraftfahrzeugkupplung, umfassend eine Vordämpfungskassette (20), die drehfest mit einem ersten drehbaren Teil, der eine Nabe (10) umfaßt, verbunden ist und Finger (24) besitzt, die jeweils in ein Fenster (18) eines zweiten drehbaren Teils (11) eingreifen, der eine Nabenscheibe umfaßt, wobei die besagten drehbaren Teile koaxial sind und ihre relative Winkelauslenkung durch mit Spiel wirksame Eingriffsmittel (16) begrenzt wird, **dadurch gekennzeichnet**, daß eine in Umfangsrichtung wirkende elastische Verbindung (30) zwischen jedem Finger (24) und der besagten Nabenscheibe (11) hergestellt wird.

2. Vorrichtung nach Anspruch 1, **dadurch gekennzeichnet**, daß die besagte elastische Verbindung durch Einsetzen eines Rings aus Elastomermaterial (30) entsteht, der in jedes der besagten Fenster der Nabenscheibe eingesetzt ist, wobei der entsprechende Finger (24) in diesen Ring eingreift.

3. Vorrichtung nach Anspruch 2, **dadurch gekennzeichnet**, daß der besagte Ring (30) in seinem Fenster (18) aufgeklemmt ist und Aufklemmrandleisten (40, 40a) umfaßt, die breiter als das Fenster (18) der Nabenscheibe (11) sind, in das der Ring aus Elastomermaterial (30) eingesetzt ist.

4. Vorrichtung nach Anspruch 3, **dadurch gekennzeichnet**, daß sich die Aufklemmrandleisten (40, 40a) jeweils auf einer Fläche der Nabenscheibe (11) erstrecken, um den besagten Ring (30) im Fenster (18) zu sichern.

5. Vorrichtung nach Anspruch 4, **dadurch gekennzeichnet**, daß der Finger (24) an seinem freien Ende eine Raste aufweist, die eine Schulter für die betreffende Randleiste (40a) bietet.

6. Vorrichtung nach Anspruch 5, **dadurch gekennzeichnet**, daß die Raste zur Achse der Baueinheit gerichtet ist.

7. Vorrichtung nach einem der Ansprüche 1 bis 6, bei der die Vordämpfungskassette (20) Federn (31) umfaßt, die umfangsmäßig einerseits zwischen einer drehfest mit der Nabe (10) verbundenen Hilfsscheibe (21) und andererseits zwischen zwei beiderseits der besagten Hilfsscheibe angeordneten Flanschen (22, 23) eingefügt sind, und bei der der am weitesten von der Nabenscheibe (11) entfernte Flansch (22) die besagten Finger (24) aufweist , **dadurch gekennzeichnet**, daß die Ringe (30) steifer als die Federn (31) sind.

8. Vorrichtung nach Anspruch 7, **dadurch gekennzeichnet** daß die Finger (24) jeweils durch den anderen Flansch (23) mit Einbauspiel durch ein Fenster (25) und anschließend durch das Fenster (18) der Nabenscheibe (11) hindurchgehen.

9. Vorrichtung nach einem der vorangehenden Ansprüche, **dadurch gekennzeichnet**, daß eine Scheibe aus Kunststoff (32) zwischen der besagten Vordämpfungskassette (20) und der Nabenscheibe (11) angeordnet ist.

## Claims

1. Torsion damping device, notably for a motor vehicle clutch, of the type having a predamping box (20) fixed with respect to rotation to a first rotary part having a hub (10), and having fingers (24) each engaged in an aperture (18) in a second rotary part (11) having a hub web, the said rotary part being coaxial and their relative angular movement being limited by means of meshing with clearance (16), characterised in that an elastic connection (30) acting in the circumferential direction is established between each finger (24) and the said hub web (11).

2. Device according to Claim 1, characterised in that the said elastic connection is obtained by fitting a ring made of elastomeric material (30) inserted in each of the said apertures in the hub web, the corresponding finger (24) being engaged in this ring.

3. Device according to Claim 2, characterised in that the said ring (30) is snapped into its aperture (18) and has snapping-in flanges (40, 40a) wider than the aperture (18) in the hub web (11) in which the ring made of elastomeric material (30) is inserted.

4. Device according to Claim 3, characterised in that the snapping-in flanges (40, 40a) each extend over a face of the web (11) so as to immobilise the said ring (30) in the aperture (18).

5. Device according to Claim 4, characterised in that the finger (24) has, at its free end, a notch offering a shoulder for the flange (40a) concerned.

6. Device according to Claim 5, characterised in that the notch is directed towards the axis of the assembly.

7. Device according to any one of Claims 1 to 6, in which the predamping box (20) has springs (31) interposed circumferentially on the one hand between an auxiliary web (21), fixed with respect to rotation to the hub (10), and on the other hand between two plates (22, 23) situated on each side of the said auxiliary web, and in which the plate (22) which is furthest away from the hub web (11) has the said fingers (24), characterised in that the rings (30) are stiffer than the springs (31).

8. Device according to Claim 7, characterised in that the fingers (24) each pass through the other plate (24) with fitting clearance through an aperture (25) and then the aperture (18) in the hub web (11).

9. Device according to any one of the preceding claims, characterised in that a washer made of plastic material (32) is disposed between the said predamping box (20) and the hub web (11).
